# EUROPEAN PATENT SPECIFICATION

(11) **EP 1 304 173 B1**
(45) Date of publication and mention of the grant of the patent: **10.05.2006**
(21) Application number: 02257147.5
(22) Date of filing: 15.10.2002
(51) Int. Cl.: B05D 5/06

(54) **Process of forming a resin molded product having metallic luster surface**
Verfahren zur Herstellung eines Harzformprodukts mit metallisch glänzender Oberfläche
Procédé de formation d'un produit moulé à base de résine avec une surface comportant une lustre métallique

(30) Priority: 21.02.2002 JP 2002044643
(43) Date of publication of application: 23.04.2003
(73) Proprietor: TEIKOKU PRINTING INKS MFG. CO., LTD, Tokyo 108-0073 (JP)
(72) Inventor: Ishikawa, Akira, Teikoku Printing Inks Mfg Co. Ltd, Arakawa-ku, Tokyo 116-0011 (JP)
(74) Representative: Hallybone, Huw George

(56) References cited:
- EP-A- 0 071 160
- EP-A- 0 387 905
- GB-A- 764 700
- GB-A- 1 157 825
- GB-A- 2 326 420
- US-A- 4 268 570
- PATENT ABSTRACTS OF JAPAN vol. 1998, no. 02, 30 January 1998 (1998-01-30) & JP 09 268269 A (TEIKOKU INK SEIZO KK), 14 October 1997 (1997-10-14)
- DATABASE WPI Section Ch, Week 200234 Derwent Publications Ltd., London, GB; Class A32, AN 2002-295544 XP002230809 & JP 2001 225347 A (DAINIPPON PRINTING CO LTD), 21 August 2001 (2001-08-21)

## Description

### BACKGROUND OF THE INVENTION

### Field of the Invention

The present invention relates to a resin molded product having a metallic luster surface.

### Description of the Related Art

Chromium plating has been performed in order to give metallic luster to a surface of conventional and various products.

EP 0387905 A2 focuses on slide fastener elements with metallic coatings. It discloses a fastener element "characterized in that the surface of a fastener element member is first of all formed with an under coat layer, and then the surface of the under coat layer is formed with a metallic coating layer, and further the surface of the metallic coating layer is formed with a finishing coat layer".

GB 1157825 A discloses an article comprising a thermoplastic polyarylene polyether substrate, "a metallic layer covering at least a portion of at least one surface of said substrate, and a protective polymeric top coat covering said metallic layer".

GB 764 700 A discloses a "method of forming an object having a body of plastic composition with a decorative and/or reflecting coating of metal thereon which comprises moulding a plasticised cellulose acetate-butyrate moulding composition into the desired shape, sealing the total surface of the moulded body with an adherent layer of a thermosetting synthetic resin and vacuum coating an adherent metallic layer over the whole or a part of the surface of the thermosetting synthetic resin layer". In an embodiment, "a transparent adherent epoxide-urea-formaldehyde resin layer is coated on the metallic layer".

US 4268570 A relates to "molded products made of a mixture of a polyester block copolymer and a copolymer of an acrylic monomer, butadiene and styrene, the surface of which product is coated with a metal". In one embodiment, this metal coat "may optionally be coated with a top coat".

EP 0071160 A2 relates to plastic cards that have metallic lusters. It discloses laminating "metal luster plastic sheets containing a metal luster pigment" on opposite surfaces of a coloured plastic sheet and then laminating transparent plastic sheets on the "external surfaces of the metal luster plastic sheets".

The abstract of JP 09 268269 A discloses a film sheet comprising "PET, PE, PC or an acrylic resin" which is "press-nipped" with mirror ink "between a pressure roll and a printing roll to tightly adhere the mirror ink to the back surface of the film sheet".

### SUMMARY OF THE INVENTION

Chromium used in chromium plating is harmful, and has a possibility of becoming a cause of environmental pollution, and simultaneously of injuring operator's health.

Therefore, an object of the present invention is to provide a resin molded product having a metallic luster surface, without performing harmful chromium plating having possible disadvantage, such as cause of environmental pollution.

In order to solve the above described problems, the following method is provided.

A method of forming a resin molded product having a metallic luster surface comprising:
printing a metallic luster layer on the side of a transparent sheet using a mirror ink; then
optionally forming a middle resin layer onto the metallic luster layer; and then
integrally forming a synthetic resin onto the back side of the metallic luster layer or, if present, the middle resin layer.

Using this method, when the resin molded product concerned is observed from outside, the metallic luster layer of the backside is viewed through a transparent sheet, and a feeling of beauty as if metal plating is performed is shown.

In one embodiment, the mirror ink includes pieces of aluminium foil having a thickness of no more than 0.5µm.

In one embodiment of this method, after printing a metallic luster layer on the side of the transparent sheet using a mirror ink, the transparent sheet is shaped and then the synthetic resin is integrally formed onto the back side of the shaped metallic luster layer or, if present, the middle resin layer.

In another embodiment, the synthetic resin is integrally formed onto the back side of the metallic luster layer or, if present, the middle resin layer by insert molding.

Moreover, the above described metallic luster layer formed by printing in the present invention is a printed layer by a mirror ink, which, in one embodiment, includes pieces of aluminum foil having a thickness of no more than 0.5 µm, preferably of no more than 0.25 µm, and more preferably of no more than 0.05 µm as a principal component of foil. Therefore, in the present invention, a mirror ink is an ink including pieces of aluminum foil having a thickness of no more than 0.5 µm, preferably of no more than 0.25 µm, and more preferably of no more than 0.05 µm as a principal component of foil.

If a thickness of aluminum foil to be used is thick exceeding 0.5 µm, specular surface luster equivalent to metal plating will not be given on the surface of resin molded product.

In addition, aluminum foil to be used preferably has pieces of aluminum foil having foil area of 10 µm² to 2000 µm² as a principal component. In order to obtain a foil area, fully diluted ink is observed under microscope, and image analysis of area of the observed piece of foil is carried out to determine an area of piece of foil. Therefore, an area of piece of foil represents an area of one of the two surfaces of the piece of foil here. When there are many pieces of foil having a foil area of no more than 10 µm², advanced specular luster may not be obtained. Moreover, when there are many pieces of foil having no less than 2000 µm² of foil area, streaks and uneven prints will be easily given in printing of screen-stencil, gravure, flexographic printing, etc. Therefore, a foil area of foil principal component of aluminum foil used for the present invention is preferably 10 µm² to 2000 µm², and more preferably 10 µm² to 1500 µm².

Moreover, in a resin molded product having a metallic luster surface of the present invention, a sheet on which the above described metallic luster layer is formed by printing of mirror ink is shaped, and the above described synthetic resin is integrally formed on the above described backside. That is, when a resin molded product has various surface configurations, the transparent sheet on which metallic luster layer is formed is firstly shaped to the surface configuration concerned.

Since the above described metallic luster layer is a printed layer by a mirror ink including pieces of the above described aluminum foil as a foil principal component at this time, very thin pieces of aluminum foil piles repeatedly without any space among them to constitute this printed layer. Therefore, even if the transparent sheet is extended by shaping and the metallic luster layer is also extended in connection with shaping, although pieces of aluminum foil in a section where the metallic luster layer concerned is extended is moved in an extended direction, any space will not be formed among laps of pieces of aluminum foil. Therefore, either crack or fracture of metallic luster layer are hardly formed in the extended section, and a shaped resin molded product having a metallic luster layer that has neither crack nor fracture may be provided.

In order to easily perform the above described shaping, it is common to soften the transparent sheet printed by a mirror ink with heat, and to perform shaping by press forming, vacuum forming, pressurized-air forming, etc.

Moreover, a synthetic resin is preferably formed integrally by insert molding on the above described backside of a sheet on which metallic luster layer is formed.

Moreover, in the present invention, a middle resin layer is further prepared between the above described metallic luster layer and the above described integrally molded synthetic resin. Operational advantages, labelled (1) and (2) bellow, are shown by preparing this middle resin layer.
(1) When a synthetic resin heated and melted at elevated temperature is integrally molded by insertion molding etc. on the above described backside of a sheet with which a metallic luster layer is formed, this middle resin layer may prevent that the mirror ink layer forming the metallic luster layer is melted and moved by the heat and flow of the injected resin and reduces luster, or that heat deformation gives damage to the metallic luster layer.
(2) Adhesive strength between the metallic luster layer and the synthetic resin integrally molded will be improved by the middle resin layer.

Moreover, above described middle resin layer comprises one layer or two or more layers. In case of two or more layers, it may comprise two layers. In this case, the first layer (the layer that touches a metallic luster layer) is preferably a layer consisting of a partially cross-linked thermoplastic resin. The second layer (the layer that touches an integrally molded synthetic resin) is preferably a layer consisting of a thermoplastic resin without cross-link or, with a degree of cross-link lower than the first layer.

In addition, the middle resin layer may include pigments etc.

Moreover, in the present invention, as a method of preparing a middle resin layer, a method is commonly used in which a metallic luster layer is formed on a backside of a transparent sheet, and furthermore an ink or a coating agent including a resin component and/or a cross-linking agent, etc. constituting a middle resin layer is printed or coated on the layer.

### BRIEF DESCRIPTION OF THE DRAWINGS

FIG. 1 is sectional view showing the first embodiment of the present invention;
FIG. 2 is a sectional view showing the second embodiment of the present invention; and
FIG. 3 is a sectional view showing the third embodiment of the present invention.

### DETAILED DESCRIPTION OF THE PREFERRED EMBODIMENTS

Hereinafter, embodiments of the present invention will be described with reference to figures.

### (The First Embodiment)

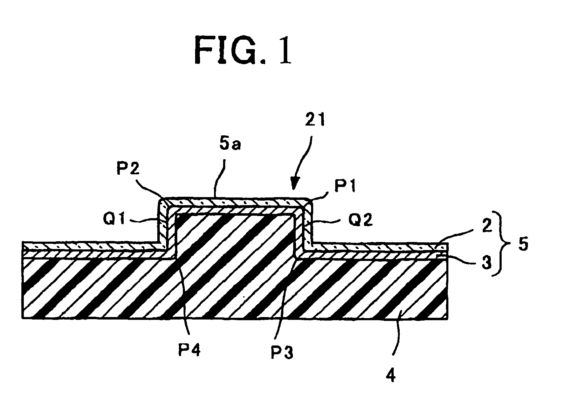

FIG. 1 shows a resin molded product 21 concerning First Embodiment of the present invention. This resin molded product 21 is constituted of a transparent sheet 2, a metallic luster layer 3 formed on a backside of this transparent sheet 2, and a synthetic resin 4 integrally molded in a backside of this metallic luster layer 3. The transparent sheet 2 consists of a sheet of polycarbonate, polyester sheet etc. having transparency and heat resistance. A metallic luster layer 3 is a printed layer currently formed on a backside of the transparent sheet 2 by printing using a mirror ink A or a mirror ink B comprising a following components.

Mirror ink A; aluminum foil having pieces of aluminum foil with a thickness of 0.25 µm and a foil area of 20 to 2000 µm² as a principal component 100 parts by weight, polyester resin 40 parts by weight, ester based solvent 800 parts by weight, and ketone based solvent 500 parts by weight.

Mirror ink B; aluminum foil having pieces of aluminum foil with a thickness of 0.03 µm and a foil area of 10 to 2000 µm² as a principal component 100 parts by weight, polyurethane resin 55 parts by weight, cellulose derivatives 10 parts by weight, and ester based solvent 1500 parts by weight.

This resin molded product 21 is manufactured by a method for production comprising following processes. That is, the above described mirror ink A or B is used, and gravure or screen-printing is given onto a backside of the transparent sheet 2. Thereby, a metallic luster layer 3 is formed on the backside of the transparent sheet 2, and appearance of the surface of the transparent sheet 2 has advanced specular luster.

Then, a metallic luster sheet 5 in which the metallic luster layer 3 is formed on the backside of the transparent sheet 2 is shaped into a form having a circular convex portion 5a in a central section viewed from upper direction by a vacuum forming, a pressurized-air forming, etc. as is shown in FIG. 1. Since the above described metallic luster layer 3 is a printed layer by a mirror ink including pieces of the above described aluminum foil as a principal foil component, flakes of aluminum foil pile to constitute this printed layer. Therefore, when the transparent sheet 2 is extended in rising section Q1 and Q2 by shaping, and the metallic luster layer 3 is extended in connection with the rising, metallic luster similar to specular surface of a section where the metallic luster layer concerned is extended will not be lost. Moreover, in curved portions P1, P2, P3, and P4, neither crack nor fracture appears in a metallic luster layer.

Furthermore, this shaped metallic luster sheet 5 is set into a metal mold with the backside having metallic luster layer 3 faced inside, and subsequently a synthetic resin melted with heat is injected into the above described metal mold, and the mold is opened after the synthetic resin 4 being solidified. Thereby, as illustrated, molding of a resin molded product 21 having convex portion 5a in a central section is completed.

When this resin molded product 21 is observed from outside, metallic luster is observed on whole area of the resin molded product through the transparent sheet 2, neither crack nor fracture is observed also in portions P1, P2, P3, and P4, and feeling of beauty as if metal plating is performed is shown. Therefore, a resin molded product 21 having a metallic luster surface is obtained, without harmful chromium plating having disadvantage, such as cause of environmental pollution.

### (The Second Embodiment)

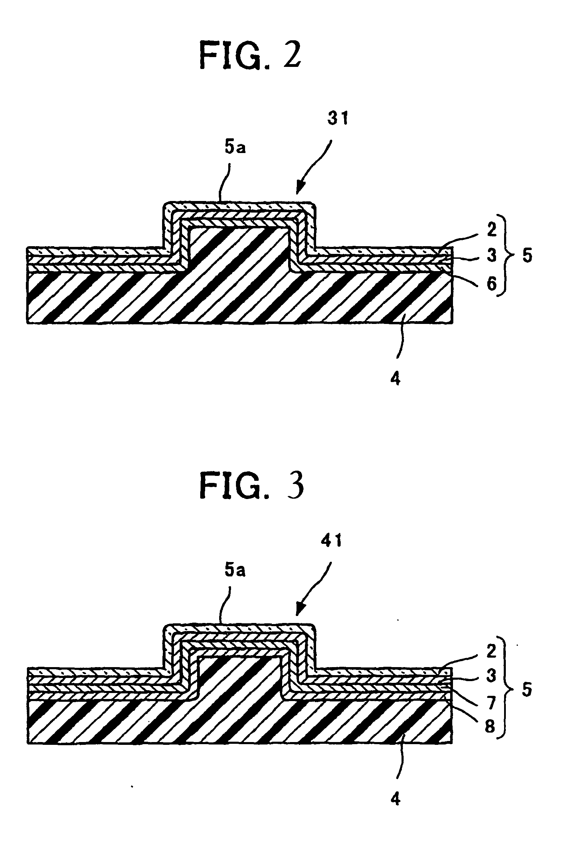

FIG. 2 shows a resin molded product 31 concerning the Second Embodiment of the present invention. This resin molded product 31 is constituted of a transparent sheet 2, a metallic luster layer 3 formed on a backside of this transparent sheet 2, a middle resin layer 6 laminated onto a backside of this metallic luster layer 3, and a synthetic resin 4 integrally molded on a backside of this middle resin layer 6. The middle resin layer 6 consists of a partially cross-linked thermoplastic resin having polyester resin as a principal component.

This resin molded product 31 is manufactured by a method of production comprising following processes. That is, printing is given to a transparent sheet 2 on a backside using the mirror ink A and B mentioned above to form a metallic luster layer 3. Furthermore, printing is given on the metallic luster layer 3, using an ink consisting of a polyester resin and a little amount of cross-linking agent to form a middle resin layer 6.

Then, a metallic luster sheet 5 in which the metallic luster layer 3 and the middle resin layer 6 are formed on the backside of the transparent sheet 2 is shaped into a form having convex portion 5a in a central section, as illustrated, by vacuum forming, pressurized-air forming, etc. At this time, neither crack nor fracture is formed in the above described sections Q1, Q2, P1, P2, P3, and P4 (refer to FIG. 1) of the metallic luster layer 3 as described above.

Furthermore, this shaped metallic luster sheet 5 is set in a metal mold so that a backside having a middle resin layer 6 may face inside, and subsequently a synthetic resin melted with heat at an elevated temperature is injected into the above described metal mold. At this time, direct contact between the injected resin melted at an elevated temperature and the metallic luster layers 3 are blocked by the middle resin layer 6. Thereby, the mirror ink that forms the metallic luster layer 3 is not melted nor moved by heat and flow of the injected resin, and as a result disadvantage of luster decrease may be prevented.

And when the injected synthetic resin 4 is solidified, the synthetic resin 4 will be firmly integrated by the middle resin layer 6 with the transparent sheet 2 on which the metallic luster layer 3 is formed. The mold is subsequently opened, and as illustrated, a resin molded product 31 having convex portion 5a in a central section and a metallic luster surface will be obtained.

### (The Third Embodiment)

FIG. 3 shows a resin molded product 41 concerning the Third Embodiment of the present invention. This resin molded product 41 is constituted of a transparent sheet 2, a metallic luster layer 3 formed in a backside of this transparent sheet 2, a first middle resin layer 7 laminated to a backside of this metallic luster layer 3, a second middle resin layer 8 integrally formed on a backside of this first middle resin layer 7, and a synthetic resin 4 integrally molded on a backside of this second middle resin layer 8.

The first middle resin layer 7 consists of a partially cross-linked thermoplastic resin. The second middle resin layer 8 consists of a thermoplastic resin without cross-linking, or with a degree of cross-link lower than the first middle resin layer 7.

This resin molded product 41 is manufactured by a method for production consisting of following processes. That is, a similar mirror ink mentioned above is used, printing is given to a backside of the transparent sheet 2 to form the metallic luster layer 3. Then, printing is given on the metallic luster layer 3 to form the first middle resin layer 7 using an ink including a polyester resin and a cross-linking agent. Furthermore, printing is given on the first middle resin layer 7, using, for example, a resin without cross-linking like vinyl chloride-vinyl acetate copolymer, or a thermoplastic resin including cross-linking agents fewer than the first middle resin layer 7 as ink to form the second middle resin layer 8.

Then, a metallic luster sheet 5 in which the metallic luster layer 3, the first middle resin layer 7, and the second middle resin layer 8 are formed on a backside of the transparent sheet 2 is shaped into an illustrated form having convex portion 5a in a central section by vacuum forming, pressurized-air forming, etc. At this time, neither crack nor fracture appears in the above described sections Q1, Q2, P1, P2, P3, and P4 of the metallic luster layer 3 (refer to FIG. 1 as described above.

Furthermore, this shaped metallic luster sheet 5 is set into a metal mold with the backside of the second middle resin layer 8 being faced inside, and subsequently a synthetic resin melted by heat at an elevated temperature is injected into the above described metal mold. At this time, direct contact between the injected melted resin at an elevated temperature and the metallic luster layer 3 is prevented by the first, and second middle resin layers 7 and 8. Thereby, a mirror ink that forms the metallic luster layer 3 is not melted nor moved by the heat and flow of the injected resin, and as a result disadvantage of luster decrease may be prevented.

And when the injected synthetic resin 4 is solidified, the synthetic resin 4 will be bonded to the second middle resin layer 8, and firmly integrated by the first and second middle resin layers 7 and 8 with the transparent sheet 2 on which the metallic luster layer 3 is formed. The mold is subsequently opened, and as illustrated, a resin molded product 41 having convex portion 5a in a central section and a metallic luster surface will be obtained. This molded product showed a very strong bond strength between the metallic luster sheet and the synthetic resin 4.

In addition, although molded products having convex position 5a in a central section are shown as resin molded products 21, 31, and 41 in the embodiments it is clear that the present invention may be applied also in molded products having more complicated concavo-convex forms etc., or flat-shaped resin molded products.

As described above, adopting the present invention, a resin molded product having a metallic luster surface or advanced specular luster and showing feeling of beauty as if metal plating is performed can be provided, without performing plating using chromium that has a possibility of causing environmental pollution and injuring operator's health.

In the claims, the reference signs do not limit the extent of the matter protected by the claims; their sole function is to make the claims easier to understand.

## Claims

1. A method of forming a resin molded product having a metallic luster surface comprising:
printing a metallic luster layer (3) on the side of a transparent sheet (2) using a mirror ink; then
optionally forming a middle resin layer (6) onto the metallic luster layer (3); and then
integrally forming a synthetic resin (4) onto the back side of the metallic luster layer (3) or, if present, the middle resin layer (6).

2. A method of forming a resin molded product having a metallic luster surface according to claim 1 wherein the mirror ink includes pieces of aluminium foil having a thickness of no more than 0.5 µm.

3. A method of forming a resin molded product having a metallic luster surface according to claim 1 or 2 wherein, after printing a metallic luster layer on the side of the transparent sheet using a mirror ink, the transparent sheet is shaped and then the synthetic resin is integrally formed onto the back side of the shaped metallic luster layer or, if present, the middle resin layer.

4. A method of forming a resin molded product having a metallic luster surface according to any of the preceding claims wherein the synthetic resin is integrally formed onto the back side of the metallic luster layer or, if present, the middle resin layer by insert molding.

5. A method of forming a resin molded product having a metallic luster surface according to any of the preceding claims wherein the optional step of forming a middle resin layer onto the metallic luster layer is not performed.

## Patentansprüche

1. Verfahren zum Ausbilden eines Kunstharzformteils mit Metallglanzfläche, umfassend:
Aufdrucken einer Metallglanzschicht (3) an der Seite eines transparenten Blatts (2) unter Verwendung einer Spiegeltinte (Mirror Ink); und dann
optional Ausbilden einer Harzmittelschicht (6) auf der Metallglanzschicht (3); und dann
integrales Ausbilden eines synthetischen Harzes (4) auf der Rückseite der Metallglanzschicht (3) oder wenn vorliegend, der Harzmittelschicht (6).

2. Verfahren zum Ausbilden eines Kunstharzformteils mit einer Metallglanzfläche nach Anspruch 1, worin die Spiegeltinte (Mirror Ink) Stücke von Aluminiumfolie mit einer Dicke von nicht mehr als 0,5 µm umfasst.

3. Verfahren zum Ausbilden eines Kunstharzformteils mit einer metallischen Metallglanzfläche nach Anspruch 1 oder 2, wobei nach Aufdrucken einer Metallglanzschicht an der Seite des transparenten Blatts unter Verwendung einer Tinte das transparente Blatt geformt wird und dann das synthetische Harz integral auf der Rückseite der geformten Metallglanzschicht ausgebildet wird, oder wenn vorliegend, der Harzmittelschicht.

4. Verfahren zum Ausbilden eines Kunstharzformteils mit einer Metallglanzfläche nach einem der vorhergehenden Ansprüche, worin das synthetische Harz integral ausgebildet ist auf der Rückseite der Metallglanzschicht, oder wenn vorliegend, der Harzmittelschicht durch Einsatzformung (Insert Molding).

5. Verfahren zum Ausbilden eines Kunstharzformteils mit einer Metallglanzfläche nach einem der vorhergehenden Ansprüche, worin der optionale Schritt des Ausbildens einer Harzmittelschicht auf der Metallglanzschicht nicht ausgeführt wird.

## Revendications

1. Procédé pour former un produit moulé en résine ayant une surface à lustre métallique comprenant :
l'impression d'une couche de lustre métallique (3) sur le côté d'une feuille transparente (2) par utilisation d'une encre à effet miroir ; puis
éventuellement la formation d'une couche de résine médiane (6) sur la couche de lustre métallique (3) ; et ensuite
la formation intégrale d'une résine synthétique (4) sur le côté d'envers de la couche de lustre métallique (3) ou, si elle est présente, la couche de résine médiane (6).

2. Procédé pour former un produit moulé en résine ayant une surface à lustre métallique selon la revendication 1, dans lequel l'encre à effet miroir comprend des morceaux de feuille d'aluminium ayant une épaisseur ne dépassant pas 0,5 µm.

3. Procédé pour former un produit moulé en résine ayant une surface à lustre métallique selon la revendication 1 ou 2, dans lequel, après impression d'une couche de lustre métallique sur le côté de la feuille transparente par utilisation d'une encre à effet miroir, la feuille transparente est façonnée et ensuite la résine synthétique est intégralement formée sur le côté d'envers de la couche de lustre métallique façonnée ou, si elle est présente, la couche de résine médiane.

4. Procédé pour former un produit moulé en résine ayant une surface à lustre métallique selon l'une quelconque des revendications précédentes, dans lequel la résine synthétique est formée intégralement sur le côté d'envers de la couche de lustre métallique ou, si elle est présente, la couche de résine médiane, par moulage par insertion.

5. Procédé pour former un produit moulé en résine ayant une surface à lustre métallique selon l'une quelconque des revendications précédentes, dans lequel l'étape facultative de formation d'une couche de résine médiane sur la couche de lustre métallique n'est pas mise en oeuvre.
